# EUROPÄISCHE PATENTSCHRIFT

(11) **EP 3 220 147 B1**
(45) Veröffentlichungstag und Bekanntmachung des Hinweises auf die Patenterteilung: **08.09.2021**
(21) Anmeldenummer: 16160973.0
(22) Anmeldetag: 17.03.2016
(51) Int. Cl.: G01N 35/00, G01N 35/04

(54) **WARNSYSTEM FÜR POTENZIELL FEHLERHAFTE MESSERGEBNISSE IN EINEM AUTOMATISCHEN ANALYSEGERÄT**
WARNING SYSTEM FOR POTENTIALLY FAULTY MEASUREMENT RESULTS IN AN AUTOMATIC ANALYZER
SYSTÈME D'AVERTISSEMENT POUR RÉSULTATS DE MESURE POTENTIELLEMENT DÉFECTUEUX DANS UN APPAREIL D'ANALYSE AUTOMATIQUE

(43) Veröffentlichungstag der Anmeldung: 20.09.2017
(73) Patentinhaber: Siemens Healthcare Diagnostics Products GmbH, 35041 Marburg (DE)
(72) Erfinder: Heppner, Daniel, 65934 Frankfurt am Main (DE); Solbach, David, 60316 Frankfurt (DE); Verhalen, Christian, 65201 Wiesbaden (DE)

(56) Entgegenhaltungen:
- EP-A1- 2 995 959
- JP-A- 2009 300 402
- US-A1- 2015 276 781

## Beschreibung

Die vorliegende Erfindung liegt auf dem Gebiet der automatischen Analysegeräte und betrifft ein automatisches Warnsystem für potenziell fehlerhafte Messergebnisse, die durch den Verlust eines Flüssigkeitsbehälters während eines Transportvorgangs verursacht werden können.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einer oder mehreren Reagenzflüssigkeiten in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Für den räumlichen Transfer von Flüssigkeitsbehältern sind häufig Greifer zum Erfassen, Halten und Freigeben eines Flüssigkeitsbehälters vorgesehen, die an einem horizontal und vertikal bewegbaren Transferarm angebracht sind. In der EP-A2-2308588 ist eine beispielhafte Vorrichtung zum Transfer von röhrchenförmigen Reaktionsgefäßen (Küvetten) innerhalb eines automatischen Analysegeräts beschrieben. Die Vorrichtung weist einen passiven, elastisch verformbaren Greifer zum kraftschlüssigen Erfassen und Halten eines Flüssigkeitsbehälters auf und eignet sich, eine einzelne, in einer Aufnahmeposition platzierte Küvette aufzunehmen, diese an eine Zielposition zu transportieren und sie dort in einer weiteren Aufnahmeposition abzusetzen. In der EP-A2-2730927 ist eine andere beispielhafte Vorrichtung zum Transfer von Reagenzflüssigkeitsbehältern innerhalb eines automatischen Analysegeräts beschrieben.

Problematisch ist, dass es beim Transport von Flüssigkeitsbehältern passieren kann, dass es beim Ergreifen, während des Transports selbst oder auch beim Abstellen des Behälters zu einem Fehler kommt, und der Behälter verloren geht. Ein Behälter kann beispielsweise umfallen oder aus einer Transportvorrichtung herausfallen und auf diese Weise unkontrolliert irgendwo im Inneren des Analysegeräts zu liegen kommen. Dabei kann es, insbesondere wenn es sich um unverschlossene Flüssigkeitsbehälter handelt, wie beispielsweise Reaktionsgefäße, durch aus dem Behälter herausspritzende oder herauslaufende Flüssigkeit zu weitreichenden Verschmutzungen im Inneren des Analysegeräts kommen. Besonders problematisch ist, dass verspritzende Flüssigkeit auch in andere Flüssigkeitsbehälter, wie beispielsweise andere Reaktionsgefäße oder Reagenzflüssigkeitsbehälter, gelangen kann, wodurch die darin enthaltenen oder darin abzugebenden Flüssigkeiten verunreinigt werden. Da die Messung einer verunreinigten Probe oder die Verwendung eines verunreinigten Reagenzes zu fehlerhaften Messergebnissen führen kann, ist es notwendig sicher zu stellen, dass erstens der Verlust eines Flüssigkeitsbehälters vom Analysegerät automatisch erkannt wird und dass zweitens ein Benutzer über den Vorfall informiert wird.

Für die Erkennung eines Verlustes eines Flüssigkeitsbehälters werden bekanntermaßen verschiedene Sensorsysteme angewendet, wie beispielsweise Hall-Sensor-Systeme an den Greifvorrichtungen, Lichtschrankensysteme in den Aufnahmepositionen für die Flüssigkeitsbehälter oder auch Kameras.

Ein bekanntes automatisches Analysegerät ist so konfiguriert, dass, wenn ein Verlust eines Reaktionsgefäßes erkannt wird, nur noch die Messungen für Reaktionsansätze in solchen Reaktionsgefäßen beendet werden, die sich bereits in der Messstation befinden, während alle anderen geplanten Messungen gestoppt werden. Erst wenn ein Benutzer sicher gestellt hat, dass Verunreinigungen entweder nicht aufgetreten sind oder beseitigt wurden, kann das Analysegerät von Neuem mit der Abarbeitung der geplanten Messungen fortfahren.

Diese Konfiguration hat den Nachteil, dass bei jedem Zwischenfall, bei dem ein Reaktionsgefäß verloren geht, d.h. auch bei solchen Zwischenfällen, bei denen gar keine Verunreinigung entstanden ist, weil z.B. ein leeres Reaktionsgefäß verloren wurde, ein zeitnaher Benutzereingriff erforderlich ist, um die Betriebsunterbrechung des Analysegeräts möglichst schnell aufzuheben. Diese Systemkonfiguration bietet ein hohes Maß an Sicherheit, erfordert aber die regelmäßige Anwesenheit eines Benutzers und damit einen hohen Instandhaltungsaufwand bzw. verursacht eine Verminderung des Gesamtdurchsatzes des Analysegeräts, wenn ein Benutzer nicht zeitnah den Vorfall bearbeiten kann. EP2995959A1 und US2015/276781 zeigen ein automatisches Analysegerät gemäß dem Stand der Technik.

Der vorliegenden Erfindung liegt damit die Aufgabe zugrunde ein automatisches Analysegerät mit einem geringeren Instandhaltungsaufwand, aber unverändert hohem Maß an Sicherheit bereit zu stellen. Die Aufgabe wird erfindungsgemäß dadurch gelöst, dass das Analysegerät mit einem Verfahren betrieben wird, bei dem ein Transportvorgang eines Flüssigkeitsbehälters überwacht wird und bei dem - sofern der Verlust eines Flüssigkeitsbehälters während des Transportvorganges festgestellt wird- zunächst geprüft wird, ob der verlorene Flüssigkeitsbehälter mit Flüssigkeit gefüllt war. Nur dann, wenn festgestellt wird, dass der Flüssigkeitsbehälter mit Flüssigkeit gefüllt war, werden allen anderen in einer Aufnahmeposition des automatischen Analysegeräts befindlichen Flüssigkeitsbehälter als potenziell verunreinigt gekennzeichnet und jedes Messergebnis einer Messung einer Eigenschaft einer flüssigen Probe, die mindestens eine Flüssigkeit aus einem als potenziell verunreinigt kennzeichneten Flüssigkeitsbehälter enthält oder die in einem als potenziell verunreinigt kennzeichneten Flüssigkeitsbehälter enthalten ist, wird als potenziell fehlerhaft gekennzeichnet.

Dies hat den Vorteil, dass nur dann, wenn tatsächlich die Gefahr einer Verunreinigung durch herumspritzende oder auslaufende Flüssigkeit besteht, tatsächlich eine Warnung eines Benutzers erfolgt. Dieses Vorgehen hat außerdem den Vorteil, dass die in dem Zeitpunkt des Vorfalls laufenden oder geplanten Messungen ohne Unterbrechung fortgeführt werden können, was den Gesamtdurchsatz des Analysegerätes erhöht. Die Kennzeichnung der potenziell fehlerhaften Messergebnisse ermöglicht es einem Benutzer, zu einem beliebigen Zeitpunkt nach dem Abschluss der Messungen zu prüfen, ob die Messergebnisse plausibel sind oder ob gegebenenfalls ein Fehler vorliegen könnte. Die gezielte Beurteilung der gekennzeichneten Messergebnisse durch einen Benutzer gewährleistet ein hohes Maß an Sicherheit und führt im Idealfall dazu, dass trotz eines Vorfalls die Messergebnisse zum frühestmöglichen Zeitpunkt vorliegen. Nur in Zweifelsfällen wird der Benutzer die nochmalige Messung einer Probe veranlassen müssen.

Gegenstand der Erfindung ist also ein Verfahren zum Betrieb eines automatischen Analysegeräts, das
- eine Vorrichtung zur Messung einer Eigenschaft einer flüssigen Probe,
- eine Vielzahl von Aufnahmepositionen für Flüssigkeitsbehälter,
- mindestens eine Vorrichtung zum Transport eines Flüssigkeitsbehälters von einer ersten Aufnahmeposition in eine zweite Aufnahmeposition, und
- einen Datenspeicher, in dem für jeden in dem Analysegerät befindlichen Flüssigkeitsbehälter ein Datensatz mit Informationen hinterlegt ist, der eine eindeutige Identifikation eines Flüssigkeitsbehälters ermöglicht,
aufweist.

Das Verfahren umfasst die Schritte:
• Überwachen eines Transportvorganges eines Flüssigkeitsbehälters von einer ersten in eine zweite Aufnahmeposition mit Hilfe eines oder mehrerer Sensoren; und
• -sofern der Verlust eines Flüssigkeitsbehälters während des Transportvorganges festgestellt wird-Prüfen, ob der verlorene Flüssigkeitsbehälter mit Flüssigkeit gefüllt war; und wobei
• -sofern festgestellt wird, dass der verlorene Flüssigkeitsbehälter mit Flüssigkeit gefüllt waralle anderen in einer Aufnahmeposition des automatischen Analysegeräts befindlichen Flüssigkeitsbehälter gekennzeichnet werden, indem dem Datensatz eines jeden in einer Aufnahmeposition des Analysegeräts befindlichen Flüssigkeitsbehälters eine weitere Information hinzugefügt wird, die den Flüssigkeitsbehälter als potenziell verunreinigt kennzeichnet; und wobei
• jedes Messergebnis einer Messung einer Eigenschaft einer flüssigen Probe, die mindestens eine Flüssigkeit aus einem als potenziell verunreinigt kennzeichneten Flüssigkeitsbehälter enthält oder die in einem als potenziell verunreinigt kennzeichneten Flüssigkeitsbehälter enthalten ist, als potenziell fehlerhaft gekennzeichnet wird.

Das Überwachen eines Transportvorganges eines Flüssigkeitsbehälters von einer ersten in eine zweite Aufnahmeposition mit Hilfe eines oder mehrerer Sensoren kann mit Hilfe jedes geeigneten Sensorsystems erfolgen. Geeignete Sensorsysteme sind z.B. mechanische, resistive, piezoelektrische, optische, kapazitive, induktive oder magnetische Sensorsysteme, wie z.B. Hall-Sensor-Systeme an den Greifvorrichtungen, Lichtschrankensysteme in den Aufnahmepositionen für die Flüssigkeitsbehälter oder auch Kameras, die den räumlichen Transfer verfolgen. Die ermittelten Messgrößen werden mit vorab ermittelten Werten verglichen, die einem ordnungsgemäßen Transportvorgang entsprechen. Abweichungen von den Sollwerten zeigen den Verlust eines Flüssigkeitsbehälters während des Transportvorganges an.

Sofern der Verlust eines Flüssigkeitsbehälters während des Transportvorganges festgestellt wird, wird zunächst geprüft, ob der verlorene Flüssigkeitsbehälter mit Flüssigkeit gefüllt war. Dies erfolgt vorzugsweise durch das Auslesen eines Datenspeichers, in dem für jeden in dem Analysegerät befindlichen Flüssigkeitsbehälter ein Datensatz mit Informationen hinterlegt ist, der eine eindeutige Identifikation eines Flüssigkeitsbehälters ermöglicht. Dieser Datenspeicher wird laufend aktualisiert und enthält neben einer Identifikationsnummer für einen spezifischen Flüssigkeitsbehälter z.B. Behälter-spezifische Informationen (z.B. Art des Behälters, z.B. Reaktionsgefäß oder Reagenzflüssigkeitsbehälter; Inhalt des Behälters, z.B. Art des Reagenzes, Probenidentifikationsnummer) und Statusspezifische Informationen (z.B. Füllzustand bzw. Füllmenge, räumliche Lokalisation), wobei letztere kontinuierlich aktualisiert werden.

Sofern bei dieser Prüfung festgestellt wird, dass der verlorene Flüssigkeitsbehälter mit Flüssigkeit gefüllt war, werden allen anderen in einer Aufnahmeposition des automatischen Analysegeräts befindlichen Flüssigkeitsbehälter gekennzeichnet, indem dem in dem Datenspeicher hinterlegten Datensatz eines jeden in einer Aufnahmeposition des Analysegeräts befindlichen Flüssigkeitsbehälters eine weitere Information hinzugefügt wird, die den Flüssigkeitsbehälter als potenziell verunreinigt kennzeichnet. In einer Aufnahmeposition des automatischen Analysegeräts befindliche Flüssigkeitsbehälter sind solche, die bereits für eine konkrete Verwendung in dem Analysegerät vorgesehen sind und bereits identifiziert und im Datenspeicher erfasst sind. Damit sind explizit nicht solche Flüssigkeitsbehälter gemeint, die ungeordnet und nicht-identifiziert in einem Vorratsbehälter, beispielsweise in Form von Schüttgut, für eine zukünftige Verwendung vorrätig gehalten werden.

Im Folgenden wird jedes Messergebnis einer Messung einer Eigenschaft einer flüssigen Probe, die mindestens eine Flüssigkeit aus einem als potenziell verunreinigt kennzeichneten Flüssigkeitsbehälter enthält oder die in einem als potenziell verunreinigt kennzeichneten Flüssigkeitsbehälter enthalten ist, als potenziell fehlerhaft gekennzeichnet. Mit anderen Worten: An alle Messergebnisse, die unter Verwendung eines als potenziell verunreinigt kennzeichneten Flüssigkeitsbehälters (z.B. eines im Zeitpunkt des Vorfalls leeren Reaktionsgefäßes) oder einer Flüssigkeit (z.B. Reagenz, Primärprobe oder Reaktionsansatz) aus einem als potenziell verunreinigt kennzeichneten Flüssigkeitsbehälters gewonnen wurden, wird das Warnkennzeichen vererbt.

Die Kennzeichnung eines Messergebnisses als "potenziell fehlerhaft" bedeutet nicht, dass das Messergebnis zwangsläufig fehlerhaft ist, sondern liefert einem Benutzer lediglich die Information, dass dieses Messergebnis einer weiteren Überprüfung bedarf.

Wird bei der Prüfung, ob der verlorene Flüssigkeitsbehälter mit Flüssigkeit gefüllte war, festgestellt, dass der verlorene Flüssigkeitsbehälter leer war, dann wird dem in dem Datenspeicher hinterlegten Datensatz eines jeden in einer Aufnahmeposition des Analysegeräts befindlichen Flüssigkeitsbehälters keine weitere Information hinzugefügt, die den Flüssigkeitsbehälter als potenziell verunreinigt kennzeichnen würde.

Bevorzugterweise werden alle Messungen von Eigenschaften flüssiger Proben, die in dem Zeitpunkt, in dem festgestellt wird, dass ein verlorener Flüssigkeitsbehälter mit Flüssigkeit gefüllt war, ohne Unterbrechung fortgeführt, bis ein Messergebnis vorliegt. Mit anderen Worten: alle geplanten Messungen werden trotz des Vorfalls abgeschlossen.

Ein weiterer Gegenstand der vorliegenden Erfindung ist ein automatisches Analysegerät, das
- eine Vorrichtung zur Messung einer Eigenschaft einer flüssigen Probe,
- eine Vielzahl von Aufnahmepositionen für Flüssigkeitsbehälter,
- mindestens eine Vorrichtung zum Transport eines Flüssigkeitsbehälters von einer ersten Aufnahmeposition in eine zweite Aufnahmeposition,
einen oder mehrere Sensoren zur Überwachung eines Transportvorganges eines Flüssigkeitsbehälters von einer ersten in eine zweite Aufnahmeposition,
- einen Datenspeicher, in dem für jeden in dem Analysegerät befindlichen Flüssigkeitsbehälter ein Datensatz mit Informationen hinterlegt ist, der eine eindeutige Identifikation eines Flüssigkeitsbehälters ermöglicht, und ferner
- eine Steuereinrichtung, die so konfiguriert ist, dass sie das vorschriebene, erfindungsgemäße Verfahren zum Betrieb des automatischen Analysegeräts steuert,
aufweist.

Insbesondere ist die Steuereinrichtung des erfindungsgemäßen automatischen Analysegeräts so konfiguriert, dass sie ein Verfahren mit den folgenden Schritten steuert:
• Überwachen eines Transportvorganges eines Flüssigkeitsbehälters von einer ersten in eine zweite Aufnahmeposition mit Hilfe des einen oder der mehreren Sensoren; und
• -sofern der Verlust eines Flüssigkeitsbehälters während des Transportvorganges festgestellt wird-Prüfen, ob der verlorene Flüssigkeitsbehälter mit Flüssigkeit gefüllt war; und wobei
• -sofern festgestellt wird, dass der verlorene Flüssigkeitsbehälter mit Flüssigkeit gefüllt waralle anderen in einer Aufnahmeposition des automatischen Analysegeräts befindlichen Flüssigkeitsbehälter gekennzeichnet werden, indem dem Datensatz eines jeden in einer Aufnahmeposition des Analysegeräts befindlichen Flüssigkeitsbehälters eine weitere Information hinzugefügt wird, die den Flüssigkeitsbehälter als potenziell verunreinigt kennzeichnet; und wobei
• jedes Messergebnis einer Messung einer Eigenschaft einer flüssigen Probe, die mindestens eine Flüssigkeit aus einem als potenziell verunreinigt kennzeichneten Flüssigkeitsbehälter enthält oder die in einem als potenziell verunreinigt kennzeichneten Flüssigkeitsbehälter enthalten ist, als potenziell fehlerhaft gekennzeichnet wird.

Die Vorrichtung zur Messung einer Eigenschaft einer flüssigen Probe ist vorzugsweise eine Vorrichtung zur Messung einer optischen Eigenschaft, wie beispielsweise ein Photometer, wie z.B. ein Spektrophotometer, ein Nephelometer oder ein Turbidimeter, oder ein Fluorometer oder ein Luminometer. Die Messungen anderer physikalischer Eigenschaften einer Probe sind jedoch ebenfalls möglich, wie z.B. die Messung von radioaktiver Strahlung (Radiometer).

Unter einer "Aufnahmeposition für einen Flüssigkeitsbehälter" ist ein Ort gemeint, der für die Platzierung eines Flüssigkeitsbehälters vorgesehen ist. Dabei handelt es sich häufig um eine baulich angepasste Aufnahmevorrichtung, die eine standsichere Aufbewahrung des Flüssigkeitsbehälters ermöglicht, wie beispielsweise Hülsen, in die ein spezifisch ausgestalteter Flüssigkeitsbehälter formschlüssig eingeführt werden kann. In einem automatischen Analysegerät sind in erster Linie Aufnahmepositionen für Primärprobengefäße, Reaktionsgefäße (üblicherweise in Form von transparenten, röhrchenförmigen Küvetten) und für Reagenzflüssigkeitsbehälter vorgesehen. Die Aufnahmepositionen befinden sich an definierten Positionen, wie z.B. in beweglichen Aufnahmeeinrichtungen, wie beispielsweise drehbaren Küvetten- oder Reagenztellern, oder stationären Vorratsbehältern.

Ein Primärprobengefäß, wie z.B. ein Blutentnahmeröhrchen, enthält die zu analysierende Probenflüssigkeit. Zu analysierende Flüssigkeiten sind z.B. Körperflüssigkeiten, wie Blut, Plasma, Serum, Urin, Fruchtwasser etc., Abwasserproben oder Zellkulturüberstände. Ein Reagenzflüssigkeitsbehälter enthält mindestens eine Flüssigkeit, die ein oder mehrere Substanzen zum Nachweis eines oder mehrerer Analyten enthält, wie z.B. Antikörperlösungen, Farbstofflösungen etc. Ein Reagenzflüssigkeitsbehälter kann ferner mehrkammrig ausgestaltet sein und mehrere, verschiedene Reagenzflüssigkeiten enthalten. Ein Reaktionsgefäß, wie z.B. eine transparente, röhrchenförmige Küvette, ist für die Bereitstellung eines Reaktionsansatzes, also einer Mischung aus Primärprobe und Reagenzflüssigkeit(en) vorgesehen.

Eine Vorrichtung zum Transport eines Flüssigkeitsbehälters von einer ersten Aufnahmeposition in eine zweite Aufnahmeposition ist vorzugsweise ein an einem horizontal und vertikal verfahrbaren oder schwenkbaren Transferarm befestigter Greifer.

Der Greifer kann Teil eines mechanischen, magnetischen, pneumatischen oder adhäsiven Greifsystems sein. Ein mechanischer Greifer kann als Einfinger-, Zweifinger- oder Mehrfingergreifer ausgestaltet sein, und er kann starr, gelenkig oder elastisch ausgeführt sein. Bevorzugterweise handelt es sich bei dem Greifer um einen passiven Klemmgreifer zum kraftschlüssigen Erfassen und Halten eines Flüssigkeitsbehälters. Dieser kann einstückig und elastisch verformbar ausgestaltet sein. Der Greifer befindet sich vorzugsweise in einem Spannungszustand, so dass es, wenn er mit ausreichender Kraft gegen einen Flüssigkeitsbehälter gedrückt wird, zu einem Schnappeffekt kommt, und der Greifer sich öffnet und den Flüssigkeitsbehälter umgreift und festhält. Umgekehrt öffnet sich der Greifer erst wieder und gibt den Flüssigkeitsbehälter frei, wenn der Greifer mit ausreichender Kraft von einem fixierten Flüssigkeitsbehälter wegbewegt wird.

In dem Datenspeicher ist für jeden in dem Analysegerät befindlichen Flüssigkeitsbehälter ein Datensatz mit Informationen hinterlegt ist, der eine eindeutige Identifikation eines Flüssigkeitsbehälters ermöglicht. Dieser Datenspeicher wird laufend aktualisiert und enthält neben einer Identifikationsnummer für einen spezifischen Flüssigkeitsbehälter z.B. Behälter-spezifische Informationen (z.B. Art des Behälters, z.B. Reaktionsgefäß oder Reagenzflüssigkeitsbehälter; Inhalt des Behälters, z.B. Art des Reagenzes, Probenidentifikationsnummer) und Statusspezifische Informationen (z.B. Füllzustand bzw. Füllmenge, räumliche Lokalisation), wobei letztere kontinuierlich aktualisiert werden. Insbesondere wird einem in dem Datenspeicher enthaltenen Datensatz für einen spezifischen Flüssigkeitsbehälter auch die Information hinzugefügt, die den Flüssigkeitsbehälter als potenziell verunreinigt kennzeichnet, wenn ein Verlust eines mit Flüssigkeit gefüllten Flüssigkeitsbehälters festgestellt wurde.

Der oder die Sensoren zum Überwachen eines Transportvorganges eines Flüssigkeitsbehälters von einer ersten in eine zweite Aufnahmeposition können ein mechanische, resistive, piezoelektrische, optische, kapazitive, induktive oder magnetische Sensoren sein.

Bevorzugt sind Hall-Sensor-Systeme am Greifer der Transportvorrichtung, Lichtschrankensysteme in den Aufnahmepositionen für die Flüssigkeitsbehälter oder auch Kameras, die den räumlichen Transfer verfolgen.

Ein erfindungsgemäßes Analysegerät umfasst bevorzugterweise ferner einen Bildschirm zur Anzeige von Messergebnissen.

In diesem Fall kann die Steuereinrichtung so konfiguriert sein, dass sie steuert, dass ein Messergebnis, das als potenziell fehlerhaft gekennzeichnet ist, in einer anderen Farbe dargestellt wird als ein Messergebnis, das nicht als potenziell fehlerhaft gekennzeichnet ist. Beispielweise können als potenziell fehlerhaft gekennzeichnete Messergebnisse in roter Farbe angezeigt werden, während nicht-gekennzeichnete Messergebnisse in schwarzer Farbe dargestellt werden.

Alternativ oder zusätzlich kann in diesem Fall die Steuereinrichtung so konfiguriert sein, dass sie steuert, dass ein Messergebnis, das als potenziell fehlerhaft gekennzeichnet wird, zusammen mit einem Warnsymbol, beispielsweise einem Piktogramm, dargestellt wird. Beispielweise können als potenziell fehlerhaft gekennzeichnete Messergebnisse zusammen mit einem Ausrufezeichen dargestellt werden, während nicht-gekennzeichnete Messergebnisse ohne Ausrufezeichen dargestellt werden.

Ein erfindungsgemäßes Analysegerät kann ferner ein zusätzliches Ausgabemedium umfassen, wobei die Steuereinrichtung dann ferner so konfiguriert ist, dass sie steuert, dass das Ausgabemedium ein visuell und/oder ein akustisch wahrnehmbares Signal erzeugt, wenn der Verlust eines gefüllten Flüssigkeitsbehälters während des Transportvorganges festgestellt wird.

Bei dem Ausgabemedium kann es sich um einen Lautsprecher handeln, wobei die Steuerung dann so konfiguriert ist, dass ein festgestellter Verlust eines gefüllten Flüssigkeitsbehälters während eines Transportvorganges in Form eines akustischen Warnsignals angezeigt wird. Das Ausgabemedium kann auch eine Warnlampe sein, die äußerlich sichtbar am Analysegerät angebracht ist, wobei die Steuerung dann so konfiguriert ist, dass ein festgestellter Verlust eines gefüllten Flüssigkeitsbehälters während eines Transportvorganges in Form Lichtsignals angezeigt wird.

Dies stellt sicher, dass ein Anwender über einen Vorfall informiert wird und rechtzeitig notwendige Maßnahmen zur Behebung etwaiger Verschmutzungen ergreifen kann.

Die Erfindung wird im Folgenden anhand einer Zeichnung erläutert.

### Darin zeigt

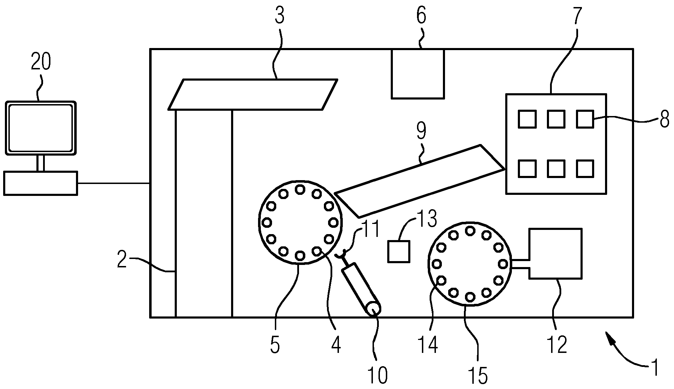

- FIG. 1: ein erfindungsgemäßes automatisches Analysegerät.

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 in Primärprobengefäßen auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. Die Küvetten werden aus einem Küvettenvorratsbehälter 6 entnommen, in dem die Küvetten ungeordnet als Schüttgut vorliegen. Erst bei der Entnahme einer einzelnen Küvette und der Platzierung der Küvette in eine Aufnahmeposition 4 wird für diese Küvette ein Datensatz erstellt, der zunächst die Information, das es sich um eine Küvette handelt und in welcher Aufnahmeposition sie platziert ist enthält. In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in eine Küvette, die bereits ein Probenaliquot enthält, abgegeben. Die Küvette mit dem Reaktionsansatz wird von dem Transferarm 10 mit einem Greifer 11 aus einer Aufnahmeposition 4 der Inkubationseinrichtung 5 entnommen und zum Durchmischen des Reaktionsansatzes zu einer Schütteleinrichtung 13 transferiert. Nach Beendigung des Mischvorgangs wird die Küvette weiter in eine Aufnahmeposition 14 der drehbaren Aufnahmevorrichtung 15 für die photometrische Messstation 12 transportiert, wo die Extinktion des Reaktionsansatzes gemessen wird. Beispielsweise während dieses Transportvorgangs oder auch während des Schüttelns kann es passieren, dass eine befüllte Küvette verloren geht. Der Verlust wird von einem nicht näher dargestellten Hall-Sensor, der zwischen Transferarm 10 und einem Greifer 11 angebracht ist, und/oder von einer ebenfalls nicht näher dargestellten Lichtschranke an der Aufnahmeposition 14 der Aufnahmevorrichtung 15 detektiert.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzgefäß
- 9: Pipettiervorrichtung
- 10: Transferarm
- 11: Greifer
- 12: Messstation
- 13: Schütteleinrichtung
- 14: Aufnahmeposition
- 15: Aufnahmevorrichtung
- 20: Steuereinheit

## Patentansprüche

1. Verfahren zum Betrieb eines automatischen Analysegeräts (1), das
• eine Vorrichtung (12) zur Messung einer Eigenschaft einer flüssigen Probe,
• eine Vielzahl von Aufnahmepositionen (4, 14) für Flüssigkeitsbehälter,
• mindestens eine Vorrichtung zum Transport eines Flüssigkeitsbehälters (10, 11) von einer ersten Aufnahmeposition (4) in eine zweite Aufnahmeposition (14), und
• einen Datenspeicher, in dem für jeden in dem Analysegerät (1) befindlichen Flüssigkeitsbehälter ein Datensatz mit Informationen hinterlegt ist, der eine eindeutige Identifikation eines Flüssigkeitsbehälters ermöglicht,
aufweist,
das Verfahren umfassend die Schritte:
• Überwachen eines Transportvorganges eines Flüssigkeitsbehälters von einer ersten in eine zweite Aufnahmeposition (4, 14) mit Hilfe eines oder mehrerer Sensoren; und
• -sofern der Verlust eines Flüssigkeitsbehälters während des Transportvorganges festgestellt wird-Prüfen, ob der verlorene Flüssigkeitsbehälter mit Flüssigkeit gefüllt war; **dadurch gekennzeichnet, dass**
• -sofern festgestellt wird, dass der verlorene Flüssigkeitsbehälter mit Flüssigkeit gefüllt waralle anderen in einer Aufnahmeposition (4, 14) des automatischen Analysegeräts (1) befindlichen Flüssigkeitsbehälter gekennzeichnet werden, indem dem Datensatz eines jeden in einer Aufnahmeposition (4, 14) des Analysegeräts (1) befindlichen Flüssigkeitsbehälters eine weitere Information hinzugefügt wird, die den Flüssigkeitsbehälter als potenziell verunreinigt kennzeichnet; und dass
• jedes Messergebnis einer Messung einer Eigenschaft einer flüssigen Probe, die mindestens eine Flüssigkeit aus einem als potenziell verunreinigt kennzeichneten Flüssigkeitsbehälter enthält oder die in einem als potenziell verunreinigt kennzeichneten Flüssigkeitsbehälter enthalten ist, als potenziell fehlerhaft gekennzeichnet wird.

2. Verfahren gemäß Anspruch 1, wobei -sofern festgestellt wird, dass der verlorene Flüssigkeitsbehälter leer wardem Datensatz eines jeden in einer Aufnahmeposition (4, 14) des Analysegeräts befindlichen Flüssigkeitsbehälters eine weitere Information nicht hinzugefügt wird, die den Flüssigkeitsbehälter als potenziell verunreinigt kennzeichnet.

3. Verfahren gemäß einem der Ansprüche 1 und 2, wobei alle Messungen von Eigenschaften flüssiger Proben, die in dem Zeitpunkt, in dem festgestellt wird, dass der verlorene Flüssigkeitsbehälter mit Flüssigkeit gefüllt war, ohne Unterbrechung fortgeführt werden bis ein Messergebnis vorliegt.

4. Automatisches Analysegerät (1), das
• eine Vorrichtung (12) zur Messung einer Eigenschaft einer flüssigen Probe,
• eine Vielzahl von Aufnahmepositionen (4, 14) für Flüssigkeitsbehälter,
• mindestens eine Vorrichtung (10, 11) zum Transport eines Flüssigkeitsbehälters von einer ersten Aufnahmeposition (4) in eine zweite Aufnahmeposition (14),
einen oder mehrere Sensoren zur Überwachung eines Transportvorganges eines Flüssigkeitsbehälters von einer ersten in eine zweite Aufnahmeposition (4, 14),
• einen Datenspeicher, in dem für jeden in dem Analysegerät (1) befindlichen Flüssigkeitsbehälter ein Datensatz mit Informationen hinterlegt ist, der eine eindeutige Identifikation eines Flüssigkeitsbehälters ermöglicht, und ferner
• eine Steuereinrichtung
aufweist,
wobei die Steuereinrichtung so konfiguriert ist, dass sie ein Verfahren mit den folgenden Schritten steuert:
• Überwachen eines Transportvorganges eines Flüssigkeitsbehälters von einer ersten in eine zweite Aufnahmeposition (4, 14) mit Hilfe des einen Sensors oder der mehreren
Sensoren; und
• -sofern der Verlust eines Flüssigkeitsbehälters während des Transportvorganges festgestellt wird-Prüfen, ob der verlorene Flüssigkeitsbehälter mit Flüssigkeit gefüllt war; **dadurch gekennzeichnet, dass**
• -sofern festgestellt wird, dass der verlorene Flüssigkeitsbehälter mit Flüssigkeit gefüllt waralle anderen in einer Aufnahmeposition (4, 14) des automatischen Analysegeräts (1) befindlichen Flüssigkeitsbehälter gekennzeichnet werden, indem dem Datensatz eines jeden in einer Aufnahmeposition (4, 14) des Analysegeräts (1) befindlichen Flüssigkeitsbehälters eine weitere Information hinzugefügt wird, die den Flüssigkeitsbehälter als potenziell verunreinigt kennzeichnet; und dass
• jedes Messergebnis einer Messung einer Eigenschaft einer flüssigen Probe, die mindestens eine Flüssigkeit aus einem als potenziell verunreinigt kennzeichneten Flüssigkeitsbehälter enthält oder die in einem als potenziell verunreinigt kennzeichneten Flüssigkeitsbehälter enthalten ist, als potenziell fehlerhaft gekennzeichnet wird.

5. Automatisches Analysegerät (1) gemäß Anspruch 4, wobei die Vorrichtung (12) zur Messung einer Eigenschaft einer flüssigen Probe ein Photometer ist.

6. Automatisches Analysegerät (1) gemäß einem der Ansprüche 4 und 5, wobei die Vielzahl von Aufnahmepositionen (4, 14) zur Aufnahme von Flüssigkeitsbehältern Aufnahmepositionen zur Aufnahme von jeweils einem röhrchenförmigen Reaktionsgefäß und/oder Aufnahmepositionen zur Aufnahme von jeweils einem Reagenzflüssigkeitsbehälter umfassen.

7. Automatisches Analysegerät (1) gemäß einem der Ansprüche 4 bis 6, wobei die Vorrichtung zum Transport eines Flüssigkeitsbehälters von einer ersten Aufnahmeposition (4) in eine zweite Aufnahmeposition (14) ein an einem horizontal und vertikal verfahrbaren Transferarm (10) befestigter Greifer (11) ist.

8. Automatisches Analysegerät (1) gemäß einem der Ansprüche 4 bis 7, wobei der oder die Sensoren zum Überwachen eines Transportvorganges eines Flüssigkeitsbehälters von einer ersten in eine zweite Aufnahmeposition (4, 14) ausgewählt ist aus der Gruppe mechanische, resistive, piezoelektrische, optische, kapazitive, induktive oder magnetische Sensoren.

9. Automatisches Analysegerät (1) gemäß einem der Ansprüche 4 bis 8, welches ferner einen Bildschirm zur Anzeige von Messergebnissen umfasst und wobei die Steuereinrichtung ferner so konfiguriert ist, dass sie steuert, dass ein Messergebnis, das als potenziell fehlerhaft gekennzeichnet ist, in einer anderen Farbe dargestellt wird als ein Messergebnis, das nicht als potenziell fehlerhaft gekennzeichnet ist.

10. Automatisches Analysegerät (1) gemäß einem der Ansprüche 4 bis 9, welches ferner einen Bildschirm zur Anzeige von Messergebnissen umfasst und wobei die Steuereinrichtung ferner so konfiguriert ist, dass sie steuert, dass ein Messergebnis, das als potenziell fehlerhaft gekennzeichnet wird, zusammen mit einem Warnsymbol dargestellt wird.

11. Automatisches Analysegerät (1) gemäß einem der Ansprüche 4 bis 10, welches ferner ein zusätzliches Ausgabemedium umfasst und wobei die Steuereinrichtung ferner so konfiguriert ist, dass sie steuert, dass das Ausgabemedium ein visuell und/oder ein akustisch wahrnehmbares Signal erzeugt, wenn der Verlust eines gefüllten Flüssigkeitsbehälters während des Transportvorganges festgestellt wird.

## Claims

1. Method for operating an automatic analyzer (1) that has
• an apparatus (12) for measuring a property of a liquid sample,
• a multiplicity of receiving positions (4, 14) for liquid containers,
• at least one apparatus for transporting a liquid container (10, 11) from a first receiving position (4) to a second receiving position (14), and
• a data memory in which a data record containing information is stored for each liquid container situated in the analyzer (1), said data record facilitating a unique identification of a liquid container,
the method comprising the steps of:
• monitoring a transport process for a liquid container from a first to a second receiving position (4, 14) with the aid of one or more sensors; and
• - if the loss of a liquid container during the transport process is determined - checking whether the lost liquid container was filled with liquid; **characterized in that**
• - if it is determined that the lost liquid container was filled with liquid - all other liquid containers situated in a receiving position (4, 14) of the automatic analyzer (1) are labelled by virtue of further information that labels the liquid container as potentially contaminated being added to the data record of each liquid container situated in a receiving position (4, 14) of the analyzer (1); and **in that**
• each measurement result of a measurement of a property of a liquid sample that contains at least one liquid from a liquid container labelled as potentially contaminated or that is contained in a liquid container labelled as potentially contaminated is labelled as potentially erroneous.

2. Method according to Claim 1, wherein - if it is determined that the lost liquid container was empty - further information labelling the liquid container as potentially contaminated is not added to the data record of each liquid container situated in a receiving position (4, 14) of the analyzer.

3. Method according to either of Claims 1 and 2, wherein all measurements of properties of liquid samples that at the time at which it is determined that the lost liquid container was filled with liquid are continued without interruption until a measurement result is available.

4. Automatic analyzer (1) that has
• an apparatus (12) for measuring a property of a liquid sample,
• a multiplicity of receiving positions (4, 14) for liquid containers,
• at least one apparatus (10, 11) for transporting a liquid container from a first receiving position (4) to a second receiving position (14),
• one or more sensors for monitoring a transport process for a liquid container from a first to a second receiving position (4, 14),
• a data memory in which a data record containing information is stored for each liquid container situated in the analyzer (1), said data record facilitating a unique identification of a liquid container, and further
• a control device,
the control device being configured such that it controls a method comprising the following steps:
• monitoring a transport process for a liquid container from a first to a second receiving position (4, 14) with the aid of the one or more sensors; and
• - if the loss of a liquid container during the transport process is determined - checking whether the lost liquid container was filled with liquid; **characterized in that**
• - if it is determined that the lost liquid container was filled with liquid - all other liquid containers situated in a receiving position (4, 14) of the automatic analyzer (1) are labelled by virtue of further information that labels the liquid container as potentially contaminated being added to the data record of each liquid container situated in a receiving position (4, 14) of the analyzer (1); and **in that**
• each measurement result of a measurement of a property of a liquid sample that contains at least one liquid from a liquid container labelled as potentially contaminated or that is contained in a liquid container labelled as potentially contaminated is labelled as potentially erroneous.

5. Automatic analyzer (1) according to Claim 4, wherein the apparatus (12) for measuring a property of a liquid sample is a photometer.

6. Automatic analyzer (1) according to either of Claims 4 and 5, wherein the multiplicity of receiving positions (4, 14) for receiving liquid containers comprise receiving positions for receiving one tube-shaped reaction vessel in each case and/or receiving positions for receiving one reagent liquid container in each case.

7. Automatic analyzer (1) according to one of Claims 4 to 6, wherein the apparatus for transporting a liquid container from a first receiving position (4) to a second receiving position (14) is a gripper (11) attached to a horizontally and vertically displaceable transfer arm (10).

8. Automatic analyzer (1) according to one of Claims 4 to 7, wherein the sensor or sensors for monitoring a transport process for a liquid container from a first to a second receiving position (4, 14) is/are selected from the group comprising mechanical, resistive, piezoelectric, optical, capacitive, inductive or magnetic sensors.

9. Automatic analyzer (1) according to one of Claims 4 to 8, which further comprises a screen for displaying measurement results and wherein the control device is further configured such that it provides control to the effect that a measurement result labelled as potentially erroneous is depicted in a different colour from a measurement result that is not labelled as potentially erroneous.

10. Automatic analyzer (1) according to one of Claims 4 to 9, which further comprises a screen for displaying measurement results and wherein the control device is further configured such that it provides control to the effect that a measurement result labelled as potentially erroneous is depicted together with a warning symbol.

11. Automatic analyzer (1) according to one of Claims 4 to 10, which further comprises an additional output medium and wherein the control device is further configured such that it provides control to the effect that the output medium generates a visually and/or audibly perceptible signal if the loss of a filled liquid container during the transport process is determined.

## Revendications

1. Procédé pour faire fonctionner un appareil (1) d'analyse automatique, qui a
• un dispositif (12) de mesure d'une propriété d'un échantillon liquide,
• une pluralité de positions (4, 14) de réception de récipients à liquide,
• au moins un dispositif de transport d'un récipient (10, 11) à liquide d'une première position (4) de réception à une deuxième position (14) de réception, et
• une mémoire de données, dans laquelle, pour chaque récipient à liquide se trouvant dans l'appareil (1) d'analyse, est mis en mémoire un ensemble de données ayant des informations, qui rendent possible une identification univoque d'un récipient à liquide,
le procédé comprenant les stades :
• on contrôle une opération de transport d'un récipient à liquide d'une première à une deuxième position (4, 14) de réception à l'aide d'un ou de plusieurs capteurs ;
• dans la mesure où l'on constate la perte d'un récipient à liquide pendant l'opération de transport on contrôle si le récipient à liquide perdu était rempli de liquide ;
**caractérisé en ce que**
• -dans la mesure où l'on constate que le récipient à liquide perdu était rempli de liquide -, on caractérise tous les autres récipients à liquide se trouvant dans une position (4, 14) de réception de l'appareil (1) d'analyse automatique, en ajoutant à l'ensemble de données de chaque récipient à liquide se trouvant dans une position (4, 14) de réception de l'appareil (1) d'analyse une autre information, qui caractérise le récipient à liquide comme potentiellement souillé et **en ce que**
• on caractérise comme potentiellement défectueux chaque résultat d'une mesure d'une propriété d'un échantillon liquide, qui contient au moins un liquide d'un récipient à liquide caractérisé comme potentiellement souillé ou qui est contenu dans un récipient à liquide caractérisé comme potentiellement souillé.

2. Procédé suivant la revendication 1, dans lequel - dans la mesure où l'on constate que le récipient à liquide perdu était vide - on n'ajoute pas à l'ensemble de données de chaque récipient à liquide se trouvant dans une position (4, 14) de réception de l'appareil d'analyse une autre information, qui caractérise le récipient à liquide comme potentiellement souillé.

3. Procédé suivant l'une des revendications 1 et 2, dans lequel toutes les mesures de propriété d'échantillons liquides, sont à l'instant où l'on constate que le récipient à liquide perdu était rempli de liquide, poursuivies sans interruption jusqu'à avoir un résultat de mesure.

4. Appareil (1) d'analyse automatique, qui a
• un dispositif (12) de mesure d'une propriété d'un échantillon liquide,
• une pluralité de positions (4, 14) de réception de récipients à liquide,
• au moins un dispositif de transport d'un récipient (10, 11) à liquide d'une première position (4) de réception à une deuxième position (14) de réception,
un ou plusieurs capteurs de contrôle d'une opération de transport d'un récipient à liquide d'une première à une deuxième position (4, 14) de réception,
• une mémoire de données, dans laquelle, pour chaque récipient à liquide se trouvant dans l'appareil (1) d'analyse, est mis en mémoire un ensemble de données ayant des informations qui rendent possible une identification univoque d'un récipient à liquide, et en outre
• un dispositif de commande,
dans lequel le dispositif de commande est configuré de manière à ce qu'il commande un procédé ayant les stades suivants :
• on contrôle une opération de transport d'un récipient à liquide d'une première à une deuxième position (4, 14) de réception à l'aide du un capteur ou des plusieurs capteurs ; et
• -dans la mesure où l'on constate la perte d'un récipient à liquide pendant l'opération de transport- on contrôle si le récipient à liquide perdu était rempli de liquide ;
**caractérisé en ce que**
• - dans la mesure où l'on constate que le récipient à liquide perdu était rempli de liquide -, on caractérise tous les autres récipients à liquide se trouvant dans une position (4, 14) de réception de l'appareil (1) d'analyse automatique, en ajoutant à l'ensemble de données de chaque récipient à liquide se trouvant dans une position (4, 14) de réception de l'appareil (1) d'analyse une autre information, qui caractérise le récipient à liquide comme potentiellement souillé et **en ce que**
• on caractérise comme potentiellement défectueux chaque résultat d'une mesure d'une propriété d'un échantillon liquide, qui contient au moins un liquide d'un récipient à liquide caractérisé comme potentiellement souillé ou qui est contenu dans un récipient à liquide caractérisé comme potentiellement souillé.

5. Appareil (1) d'analyse automatique suivant la revendication 4, dans lequel le dispositif de mesure d'une propriété d'un échantillon liquide est un photomètre.

6. Appareil (1) d'analyse automatique suivant l'une des revendications 4 et 5, dans lequel la pluralité de positions (4, 14) de réception pour la réception de récipients à liquide comprennent des positions de réception pour la réception de respectivement un récipient de réaction en forme de tube et/ou des positions de réception pour la réception de respectivement un récipient de réaction pour réactif.

7. Appareil (1) d'analyse automatique suivant l'une des revendications 4 à 6, dans lequel le dispositif de transport d'un récipient à liquide d'une première position (4) de réception à une deuxième position (14) de réception est un préhenseur (11) fixé à un bras (10) de transfert pouvant être déplacé horizontalement et verticalement.

8. Appareil (1) d'analyse automatique suivant l'une des revendications 4 à 7, dans lequel le ou les capteurs de contrôle d'une opération de transport d'un récipient à liquide d'une première à une deuxième position (4, 14) de réception est choisi dans le groupe des capteurs mécaniques, résistifs, piézoélectriques, optiques, capacitifs, inductifs ou magnétiques.

9. Appareil (1) d'analyse automatique suivant l'une des revendications 4 à 8, qui comprend en outre un écran d'affichage de résultats de mesure et dans lequel le dispositif de commande est configuré en outre de manière à commander de façon à représenter un résultat de mesure, qui est caractérisé comme potentiellement défectueux, en une couleur autre qu'un résultat de mesure, qui n'est pas caractérisé comme potentiellement défectueux.

10. Appareil (1) d'analyse automatique suivant l'une des revendications 4 à 9, qui comprend en outre un écran d'affichage de résultats de mesure et dans lequel le dispositif de commande est configuré en outre de manière à commander de façon à représenter un résultat de mesure, qui est caractérisé comme potentiellement défectueux, ensemble avec un symbole d'alerte.

11. Appareil (1) d'analyse automatique suivant l'une des revendications 4 à 10, qui comprend en outre un support de sortie supplémentaire et dans lequel le dispositif de commande est configuré en outre de manière à commander de façon à ce que le support de sortie produise un signal perceptible visuellement et/ou acoustiquement si l'on constate la perte d'un récipient à liquide rempli pendant l'opération de transport.
